# EUROPEAN PATENT APPLICATION

(11) **EP 2 998 888 A1**
(43) Date of publication of application: **23.03.2016**
(21) Application number: 15186579.7
(22) Date of filing: 28.11.2007
(51) Int. Cl.: G06F 17/30, H04M 3/42, H04M 1/725, G06F 3/048

(54) **DEVICE FOR PROVIDING LOCATION-BASED DATA**

(30) Priority: 05.12.2006 US 634365
(62) Divisional of application: 07871622.2
(71) Applicant: Qualcomm Incorporated, San Diego, CA 92121-1714 (US)
(72) Inventor: Kansai, Sachin S., San Diego, CA 92121 (US); Stewart, William K., San Diego, CA 92121 (US); Wang, Evelyn, San Diego, CA 92121 (US)
(74) Representative: Potter, Julian Mark

(57) **Abstract**

An electronic device includes a processing circuit configured to operate at least a first application and a second application. The first application is configured to provide location-based data based upon a request for the location-based data. A display is configured to provide an image having a first image portion associated with the first application and a second image portion associated with the second application. The first image portion is configured to receive the request for the location-based.

## Description

### CROSS-REFERENCE TO RELATED PATENT APPLICATIONS

The present application claims priority to U.S. Application No. 11/634,365, entitled "Device for Providing Location-Based Data" filed December 5, 2006 (Attorney Docket No. 035451-0246), which is herein incorporated by reference in its entirety.

### BACKGROUND

The present invention relates generally to the field of location-based services, and more particularly, to providing location-based services via a main image of a mobile computing device.

Typical location-based services provided on electronic devices such as desktop or laptop computers may provide, for example, mapping capabilities that enable a user to enter a starting point (e.g., a starting street address, city, and/or state/zip code) and a destination point (e.g., a destination street address, city, and/or state/zip code), and receive as output from the electronic device textual or graphical directions from the starting point to the destination point, point of interest information, etc. These services, however, typically cannot determine the location of the electronic device (which often may be the starting point) and the user must manually enter the information.

Other types of location-based services, often provided on mobile electronic devices, may take the location of the user into account through the use of, for example, a Global Positioning System or other location-determining system. Consequently, a user wishing to obtain location-based information is able to base directions, point of interest information, etc., on his or her current location, without having to manually enter a starting point location, and must therefore enter only a destination point location. However, these services are typically not provided as part of the primary or main image or display of the mobile device, and may require a user to scroll through several images of information or upload an application prior to being able to enter the desired location information.

Accordingly, there is a need for an electronic device that is able to provide location-based services where the electronic device is able to determine the current location of the device. Further, there is a need for an electronic device that provides location-based services on the main image of the device.

The teachings herein extend to those embodiments which arc within the scope of the appended claims, regardless of whether they accomplish one or more of the above-identified needs.

### BRIEF DESCRIPTION OF THE FIGURES

FIG. 1 is a front view of a mobile computing device according to an exemplary embodiment;
FIG. 2 is a back view of the mobile computing device of FIG. 1;
FIG. 3 is a block diagram of the mobile computing device of FIG. 1 according to an exemplary embodiment;
FIG. 4 is an illustration of a main image of the mobile computing device of FIG. 1 according to an exemplary embodiment;
FIG. 5 is a series of location-based search fields that may be used in conjunction with the main image of FIG. 4;
FIG. 6 is an illustration of a results image for a location-based search according to an exemplary embodiment;
FIG. 7 is an illustration of the results image of FIG. 6 including a menu of options for a selected result according to an exemplary embodiment;
FIG. 8 is an illustration of an image showing to/from information for a selected result according to an exemplary embodiment;
FIG. 9 is an illustration of a results image for a location-based search according to an exemplary embodiment;
FIG. 10 is an illustration of the results image of FIG. 9 including information for a selected result;
FIG. 11 is an illustration of the results image of FIG. 10 including a menu of options for the selected result;
FIG. 12 is an illustration of an image showing to/from information for a selected result according to an exemplary embodiment;
FIG. 13 is an illustration of a results image for a location-based search for a specific destination according to an exemplary embodiment; and
FIG. 14 is a flowchart illustrating the process of conducting a location-based search from the main image of a mobile computing device according to an exemplary embodiment.

### DETAILED DESCRIPTION OF EXEMPLARY EMBODIMENTS

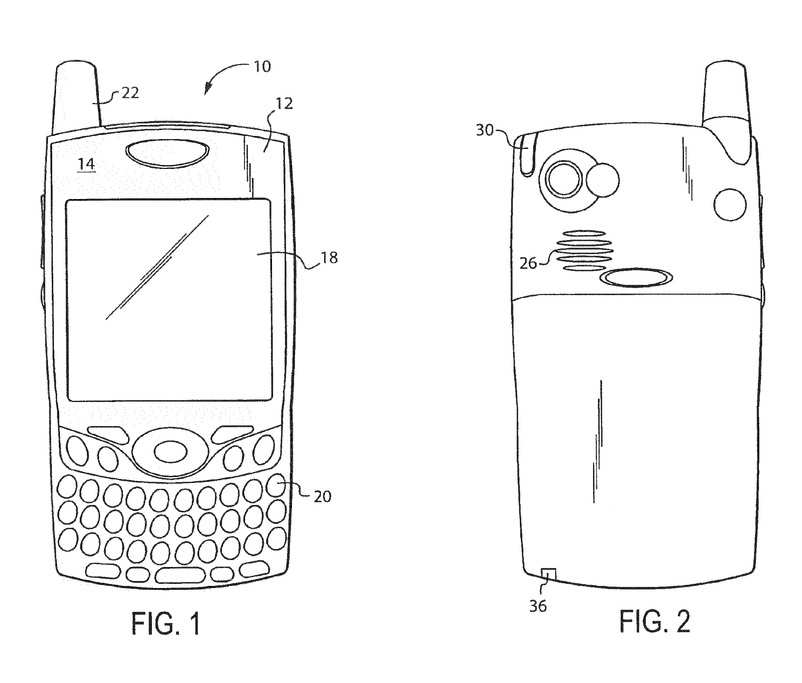

Referring to FIGS. 1 and 2, a mobile computing device 10 is shown. The teachings herein can be applied to device 10 or to other electronic devices (e.g., a desktop computer), mobile computing devices (e.g., a laptop computer) or handheld computing devices (e.g., a personal digital assistant (PDA), smartphone, etc.). According to one embodiment, device 10 is a smartphone, which is a combination mobile telephone and handheld computer having PDA functionality. PDA functionality can comprise one or more of personal information management (e.g., including personal data applications such as email, calendar, phone, text messaging, etc.), database functions, word processing, spreadsheets, voice memo recording, Global Positioning System (GPS) functionality, etc. Device 10 is configured to synchronize personal information from these applications with a computer (e.g., a desktop, laptop, server, etc.). Device 10 is further configured to receive and operate additional applications provided to device 10 after manufacture, e.g., via wired or wireless download, SecureDigital card, etc.

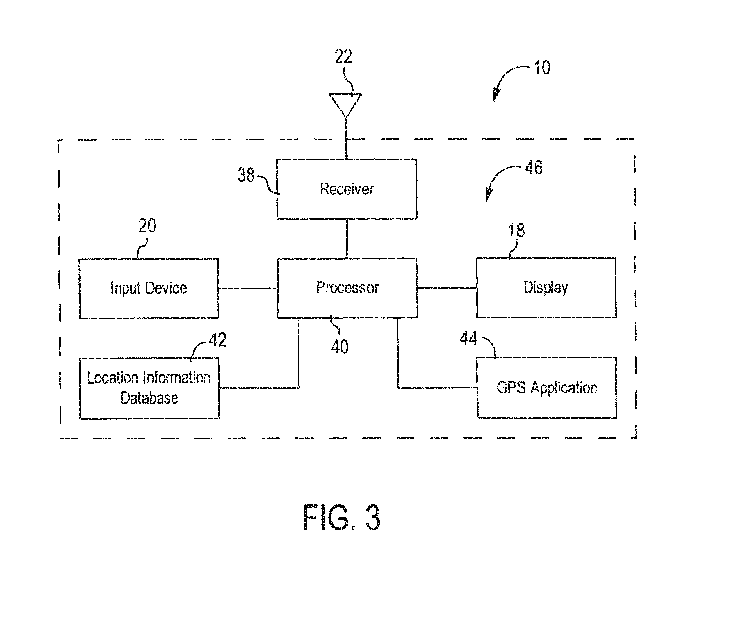

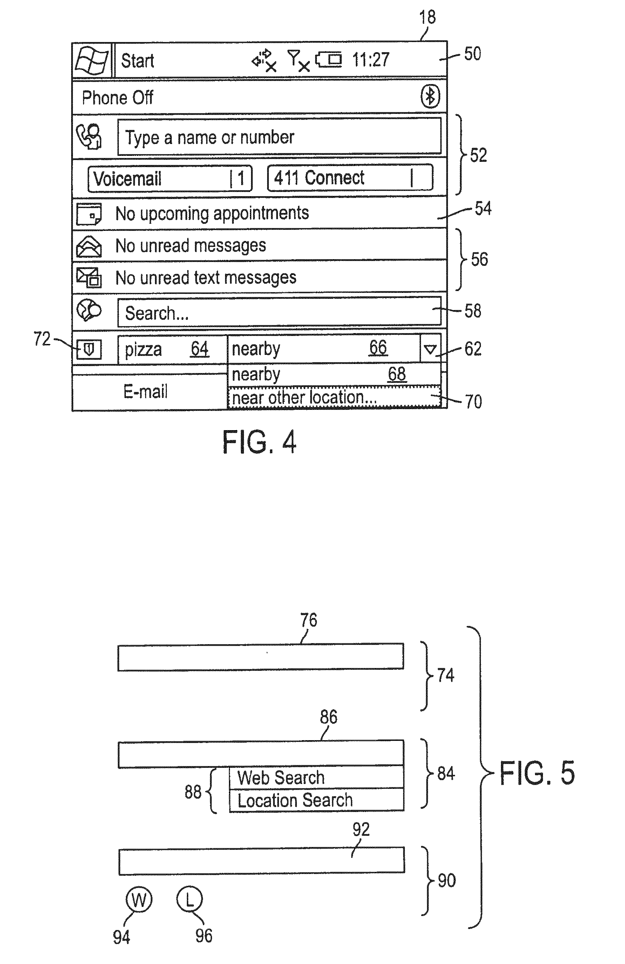

As shown in FIGS. 1 and 2, device 10 includes a housing 12 and a front side 14 and a back side 16. Device 10 further comprises a display 18 and a user input device 20 (e.g., a QWERTY keyboard, buttons, touch screen, speech recognition engine, etc.). Display 18 can comprise a touch screen display in order to provide user input to a processor 40 (see FIG. 3) to control functions, such as to select options displayed on display 18, enter text input to device 10, or enter other types of input. Display 18 also provides images (see, e.g., FIG. 4) that arc displayed to and may be viewed by users of device 10. User input device 20 can provide similar inputs as those of touch screen display 18. Device 10 can further comprise a stylus 30 to assist the user in making selections on display 18.

Referring now to Fig. 3, device 10 comprises a processing circuit 46 comprising a processor 40. Processor 40 can comprise one or more microprocessors, microcontrollers, and other analog and/or digital circuit components configured to perform the functions described herein. Processor 40 comprises one or more memory chips (e.g., random access memory, read only memory, flash, etc.) configured to store software applications provided during manufacture or subsequent to manufacture by the user or by a distributor of device 10. In one embodiment, processor 40 can comprise a first applications microprocessor configured to run a variety of personal information management applications, such as calendar, contacts, etc., and a second, radio processor on a separate chip or as part of a dual-core chip with the application processor. The radio processor is configured to operate telephony functionality. Device 10 can be configured for cellular radio telephone communication, such as Code Division Multiple Access (CDMA), Global System for Mobile Communications (GSM), Third Generation (3G) systems such as Wide-Band CDMA (WCDMA), or other cellular radio telephone technologies. Device 10 can further be configured for data communication functionality, for example, via GSM with General Packet Radio Service (GPRS) systems (GSM/GPRS), CDMA/1XRTT systems, Enhanced Data Rates for Global Evolution (EDGE) systems, Evolution Data Only or Evolution Data Optimized (EV-DO), and/or other data communication technologies.

Device 10 comprises a receiver 38 which comprises analog and/or digital electrical components configured to receive and transmit wireless signals via antenna 22 to provide cellular telephone and/or data communications with a fixed wireless access point, such as a cellular telephone tower, in conjunction with a network carrier, such as, Verizon Wireless, Sprint, etc. Device 10 can further comprise circuitry to provide communication over a local area network, such as Ethernet or according to an IEEE 802.11 x standard or a personal area network, such as a Bluetooth or infrared communication technology.

Device 10 further comprises a microphone 36 configured to receive audio signals, such as voice signals, from a user or other person in the vicinity of device 10, typically by way of spoken words. Alternatively or in addition, processor 40 can further be configured to provide video conferencing capabilities by displaying on display 18 video from a remote participant to a video conference, by providing a video camera on device 10 for providing images to the remote participant, by providing text messaging, two-way audio streaming in full- and/or half-duplex mode, etc.

Device 10 further comprises a location determining application, shown in FIG. 3 as GPS application 44. GPS application 44 can communicate with and provide the location of device 10 at any given time. Device 10 may employ one or more location determination techniques including, for example, Global Positioning System (GPS) techniques, Cell Global Identity (CGI) techniques, CGI including timing advance (TA) techniques, Enhanced Forward Link Trilateration (EFLT) techniques, Time Difference of Arrival (TDOA) techniques, Angle of Arrival (AOA) techniques, Advanced Forward Link Trilateration (AFTL) techniques, Observed Time Difference of Arrival (OTDOA), Enhanced Observed Time Difference (EOTD) techniques, Assisted GPS (AGPS) techniques, hybrid techniques (e.g., GPS/CGI, AGPS/CGI, GPS/AFTL or AGPS/AFTL for CDMA networks, GPS/EOTD or AGPS/EOTD for GSM/GPRS networks, GPS/OTDOA or AGPS/OTDOA for UMTS networks), and so forth.

Device 10 may be arranged to operate in one or more location determination modes including, for example, a standalone mode, a mobile station (MS) assisted mode, and/or an MS-based mode. In a standalone mode, such as a standalone GPS mode, device 10 may be arranged to autonomously determine its location without real-time network interaction or support. When operating in an MS-assisted mode or an MS-based mode, however, device 10 may be arranged to communicate over a radio access network (e.g., UMTS radio access network) with a location determination entity such as a location proxy server (LPS) and/or a mobile positioning center (MPC).

Device 10 may further comprise a location information database 42. Database 42 includes information for various locations (e.g., streets, intersections, restaurants, hotels, banks, etc.), including location names, addresses, phone numbers, etc., and may contain additional location-specific information (e.g., hours of operation, menus, point-of-interest information, etc.). As discussed in more detail below, processor 40 (e.g., operating a location data application) can access the information stored in database 42 and, in response to a location-based search, can provide information regarding locations that may be located at a specific address, near the current location of device 10, near a different location (e.g., city, state, zip code, etc.), etc. Various embodiments of initiating a location-based search from a main image of an electronic device will now be discussed in more detail with particular reference to FIGS. 4 and 5.

Referring to FIG. 4, according to one embodiment, processor 40 can provide various images via display 18, such as main image 50 shown in FIG. 4. Image 50 is one of numerous images, displays, screens, pages, etc. that processor 40 provides via display 18. Other images may include additional e-mail information, calendar information, contacts information, web-browsing information, etc.

Referring further to FIG. 4, main image 50 includes various types of information fields and input interfaces (e.g., icons on the touch screen that function as input buttons when touched by or clicked on by a user, for example, using stylus 30). According to one embodiment, image 50 includes a plurality of image portions, each of which is associated with an application that is capable of storing personalized user data (e.g., phone numbers, calendar appointments, email or other messages, contact information, etc.). For example, as shown in FIG. 4, image 50 includes an image portion 52, which may include phone information and a user input field to receive a phone number (or a name to look up in a contacts database), a voicemail icon, and an information (e.g., "411") icon, and image portion 54, which may include calendar information and indicate whether a user has any upcoming appointments, etc. Further, image 50 includes an image portion 56, which may provide messaging information and indications as to whether any new email, text messages, or other types of messages have recently been received or remain unread. In addition, image 50 may include image portion 58 that includes a user input field and permits users to enter search queries and perform traditional web-based searches. Further yet, image 50 also includes an image portion 62 for receiving a request for location-based data.

According to one embodiment, image 50 includes each of image portions 52, 54, 56, 58, and 62 displayed simultaneously. Further, each of the image portions is associated with a particular application (e.g., email, calendar, phone, etc.) and provides a subset of the data (e.g., personalized user data) that would be displayed should a user select the application for use (e.g., by tapping on the appropriate image portion for the desired application). Further, one or more of the image portions may include user input features such as selectable icons or user input fields (e.g., a text box, etc.), and the image portions themselves may be selectable to launch or otherwise invoke a respective application. Further yet, the image portions may include textual representations or descriptions of the applications, or actual textual or other data stored by the application (e.g., the text of an email, text message, etc.). According to yet another embodiment, image 50 may be reconfigurable by a user such that a user may select which applications are represented by the various image portions and modify the order and/or manner in which the image portions are displayed.

According to another embodiment, image 50 is the default image that appears upon powering-up device 10, logging on to device 10, etc. According to yet another embodiment, image 50 may be embedded within one or more other images, screens, pages, etc. of device 10, but include a plurality of image portions each providing a subset of data (e.g., personalized user data) for a particular application (e.g., email, calendar, phone, etc.). According to yet another embodiment, image 50 may be the "top level" image provided to users as users "back out" of previous images, for example, by pressing an "ok" or "back" key one or more times from other images provided on device 10. According to another embodiment, image 50 may be provided as a menu, such as a drop-down menu, that is accessible from one or more other images, and includes a user input field for receiving a request for location-based data.

Referring again to FIG. 4, image portion 62 includes user input fields 64 and 66 (search bars, text boxes, etc.), which in one embodiment are search text boxes configured to receive inputs from a user of device 10, either via input device 20, or touch screen display 18, or other input. User input fields 64, 66 receive search requests, search query parameters (e.g., etc.,) that are used to perform a location-based search. According to one embodiment, user input field 64 receives a description of what (e.g., a type of or a name of a destination) a user wants to locate, e.g., a restaurant, a bank, an automated teller machine (ATM), etc. User input field 66 receives location information related to the destination, e.g., near the current location of device 10, at or near a specific address, within or near a specific zip code, city, state, etc., and so on.

For example, a user may want to locate a pizza restaurant near the user's current location. As shown in FIG. 4, the user may enter the term "pizza" into user input field 64. The user may then select (e.g., right-arrow to, click-on, touch via a touch screen, etc.) user input field 66, upon which device 10 displays a menu (e.g., pull down menu, etc. having options 68, 70. Options 68, 70 may include directions that instruct device 10 to locate destinations for the term "pizza" that are near the user's current location (option 68), near a different location (option 70), within a specific area, etc. The user selects the desired option, and if necessary, may be prompted to enter further information into user input field 66 (e.g., if a user selects option 70 ("near another location"), the user may then be prompted to enter the other location, such as a city name). Alternatively, rather than selecting a menu option, the user may manually type the desired information into user input field 66. According to one embodiment, to search for a particular street address, a user may enter the street address into user input field 64, and enter the city, state, zip code, etc. (if known) into user input field 66. Upon completion of entering the required information into user input fields 64 and 66, the user initiates the location-based search. Initiation of the location-based search may be done in a variety of ways, including selecting a designated icon 72 on display 18, depressing a designated input button on input device 20, etc.

It should be noted that as shown in FIG. 4 both of user input fields 64, 66 are populated. According to one embodiment, processor 40 recognizes when one of user input fields 64, 66 is not populated and, if necessary, uses default values for the missing information. For example, should a user enter "pizza" into user input field 64 and initiate a location-based search without specifying any search criteria in user input field 66, processor 40 may use the "nearby" option (option 68) as a default. Alternatively, if a user wishes to locate a specific street address, the user may enter only the street address into user input field 64 and no information into user input field 66. As a default, processor 40 may then list any matches to the street address in order of proximity to the current location of device 10. The default settings may vary, and device 10 may further permit users to configure the default settings.

As shown in FIG. 4, image portion 62 includes two separate user input fields 64, 66. According to various alternative embodiments, other types of user input fields may be provided as a part of image portion 62 and main image 50 to enable a user to input the location-based search information. Referring to FIG. 5, various alternative image portions are illustrated.

According to one embodiment, an image portion 74 includes a single user input field 76 that replaces user input fields 64 and 66. A user enters a search request into user input field 76, and the location-based search is then initiated. Processor 40 may be configured to recognize search strings that include connectors such as "at," "near," "in," etc., such that users can enter essentially the same information into user input field 76 as they can into both user input fields 64, 66 (e.g., instead of entering "pizza" into user input field 64 and "Chicago" into user input field 66, a user may enter "pizza in Chicago" into user input field 76).

According to another embodiment, an image portion 84 includes a single user input field 86 that not only replaces user input fields 64, 66, but may also replace a traditional web-based user input field (e.g., such as the user input field illustrated as part of image portion 58 illustrated in FIG. 4). User input field 86 operates similarly to user input field 76, except user input field 86 is an integrated user input field for both traditional web-based searching (e.g., via Google or other web search service), and location-based searching. Upon entering the search request search query into user input field 86, the user may activate a menu such as pull-down menu 88, from which the user may choose to either perform a traditional web-based search or a location-based search.

According to yet another embodiment, an image portion 90 includes a user input field 92 that operates similarly to user input field 86, in that user input field 92 is an integrated web-based/location-based user input field. However, rather than utilizing a menu to specify the search type, user input field 92 is accompanied by two icons 94, 96 displayed adjacent to user input field 92. Icon 94 initiates a traditional web-based search, and icon 96 initiates a location-based search. Icons 94, 96 may be selected via either input device 20 or via display 18, or through any other suitable input means. While icons 94, 96 arc illustrated in FIG. 5 as being positioned below user input field 92, according to various alternative embodiments, icons 94, 96 may be located at other locations on display 18 (e.g., in a side-by-side orientation next to user input field 92).

It should be noted that minimizing the number of user input fields displayed on the main image of an electronic device, e.g., by integrating a web-based user input field and a location-based user input field, permits the maximization of the use of the available display space, or "real estate," available on device displays, particularly with respect to mobile electronic devices such as PDA's, smartphones, etc., where mobility requirements often constrain the space available for displaying images, etc. Thus, providing an integrated user input field such as those disclosed herein may enhance the utility of the images of electronic devices, particularly mobile computing devices.

Once the search query or request is entered and the location-based search is initiated, processor 40 communicates with GPS application 44 (or other location-determining application), which may be "on-board" or integral with device 10, or may be nearby and communicating with device 10 over a personal area network (e.g., via Bluetooth, infrared, etc.), to determine the current geographic location of device 10. According to one embodiment, if GPS application 44 is unable to determine the current location of device 10, processor 40 may prompt a user to manually input the current location, or may display a list of default locations (e.g., home address, recently visited locations, work address, etc.), from which a default location may be chosen. Processor 40 utilizes the current location of device 10 and the search query received from the user to search location information database 42 for matching search results. The search results include location-based data, which may comprise directions Processor 40 performs the location-based search in conjunction with location information database 42, both of which, as shown in FIG. 3, are located on device 10 (i.e., an "on-board" configuration).

According to an alternative embodiment, processor 40 may wirclcssly transmit the location of device 10 and the search query information received via search field 64 to a remote (e.g., physically detached) server that performs the location-based search and wirclcssly transmits the results back to device 10 (i.e., an "off-board" configuration). According to one embodiment, database 42 is located on the remote server rather than as a part of device 10. An off-board configuration may provide more accurate results than an on-board configuration because the location information database maybe updated more regularly. However, off-board configurations may require additional time to return results because of the additional transmissions involved.

According to another alternative embodiment, processor 40 performs the location-based search in conjunction with location information database 42, both of which are a part of device 10, as in the on-board configuration discussed above, but in addition, processor 40 may periodically (e.g., at set intervals, at intervals based on the location of device 10, etc.) communicate wirelessly with a remote server, as in the off-board configuration discussed above, to update the information stored in location information database 42 (e.g., in a "hybrid" configuration), and identify any updates in information (e.g., new locations, etc.) that have been stored on the remote server or other device since the last update of location information database 42.

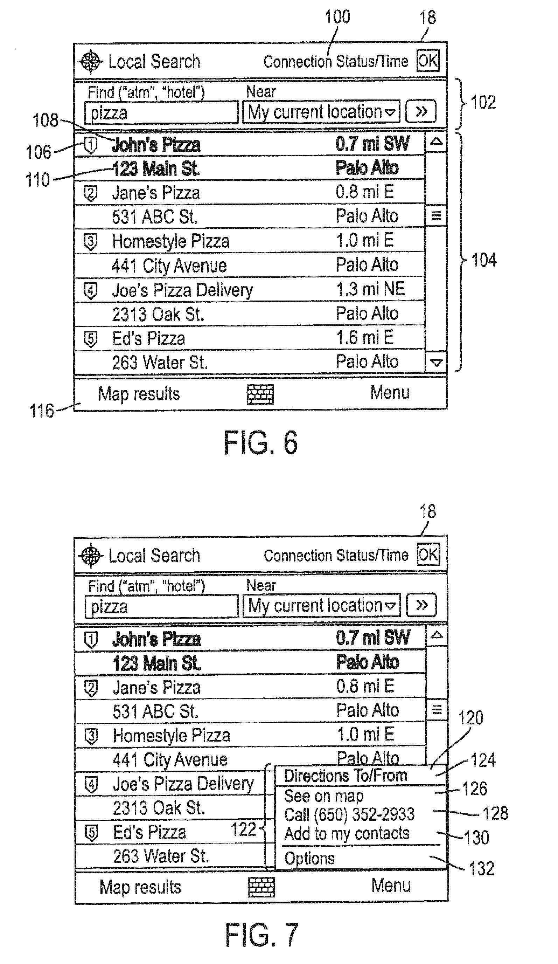

Once the results of the location-based search are generated, the results may be displayed on display 18. Various embodiments of images that may be used to provide the results of a location-based search are discussed in more detail below with respect to FIGS. 6-13.

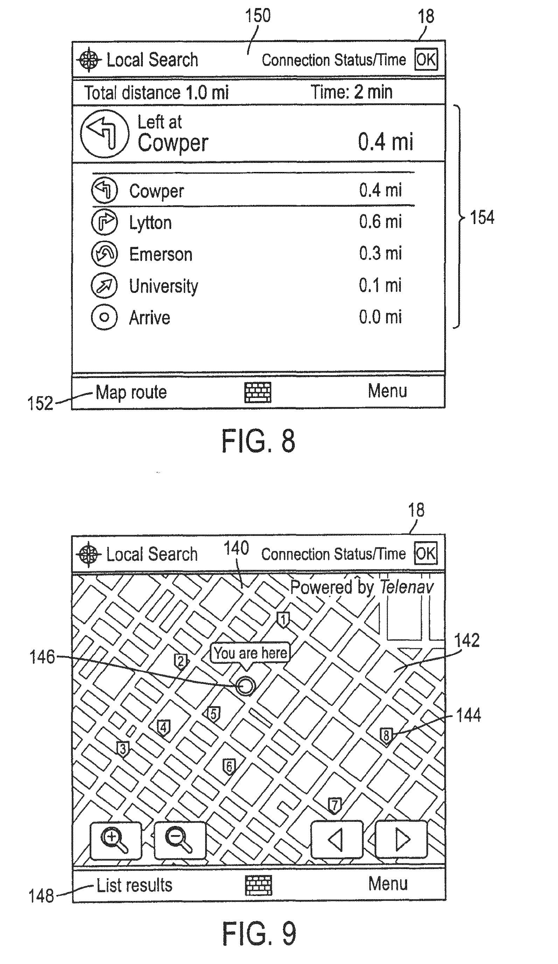

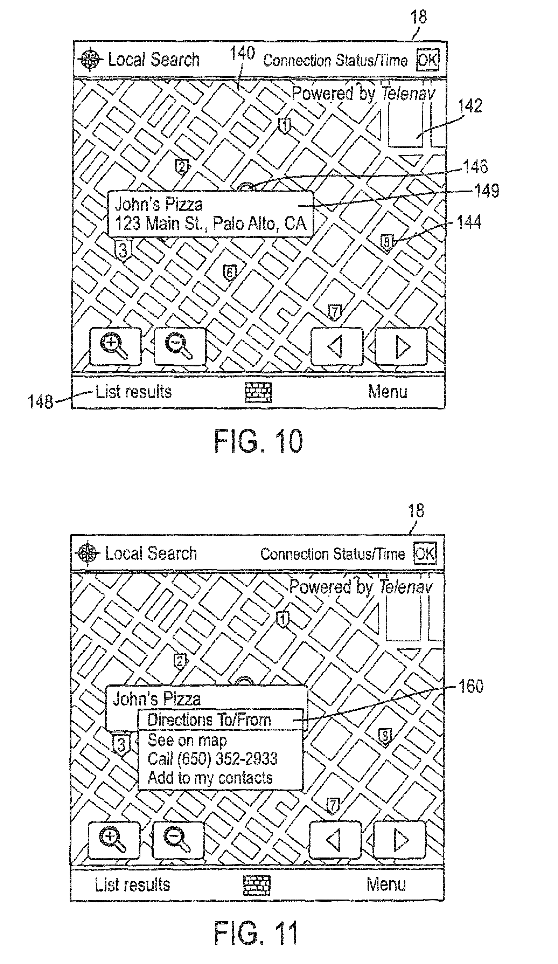

Referring now to FIG. 6, display 18 showing an image 100 of location-based search results is illustrated. The search results may be displayed either textually (e.g., in a list format) as shown in FIG. 6, or graphically (e.g., superimposed upon a map) as shown in FIGS. 9 and 10. As shown in FIG. 6, an image 100 provided on display 18 may identify the search parameters 102 used and the search results 104 generated. Each search result 104 may include information such as an item number 106, a destination name 108, a destination address 110 (if available), a distance and/or direction 112 to the destination (e.g., from the current location of device 10 or another specified location), and other location information 114 (e.g., a city, state, zip code, etc.). A user may scroll through the results using input device 20, display 18, etc., and/or select a desired destination. As shown in FIG. 6, a user has highlighted destination item number 1 ("John's Pizza").

Referring further to FIG. 6, search results 104 arc provided as a textual list. FIG. 6 may include a toggle button 116 that permits a user to toggle between a textual list as shown in FIG. 6 and a graphical image of results, as shown in FIGS. 9 and 10. According to one embodiment, shown in FIGS. 9 and 10, the location-based search results may be provided as a graphical display utilizing a geographic map having street names, point of interest identifiers, etc. For example, as shown in FIGS. 9 and 10, an image 140 may include a map 142 that contains item numbers or results 144 located on map 142 corresponding to the location-based search results. Image 140 may also include the current location 146 of device 10 and a toggle button 148 that permits a user to toggle back to the textual list (such as image 100 shown in FIG. 6) of results. As shown in FIG. 10, detailed information 149 may be provided for an individual result by a user selecting (e.g., hovering over, clicking on, etc.) a specific result 144 on image 140.

Referring now to FIG. 7, according to one embodiment, upon selecting an individual search result (e.g., from an image such as image 100 shown in FIG. 6), a user is displayed a menu 120 that provides one or more options 122 that may be selected. As shown in FIG. 7, menu 120 is a drop down menu that may be scrolled through, and may include options such as "Directions To/From" 124, "See on Map" 126, "Call [phone number]" 128, "Add to my contacts" 130, and/or "Options" 132. More or fewer options may be provided as a part of menu 120, and menu 120 may be provided in a variety of formats and configurations. Menu 120 may be displayed over a textual list of results as shown in FIG. 7, or optionally, as shown in FIG. 11 a menu 160 may be displayed over a graphical map of results, with the same options being available. According to one embodiment, menu 120 may be displayed as a separate image on display 18.

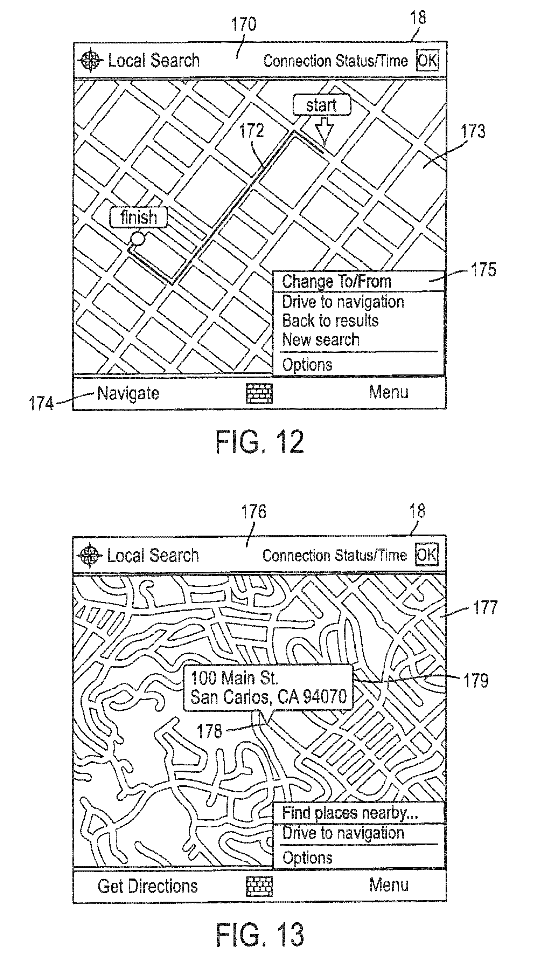

Upon one of options 124-130 of FIG. 7 being selected, processor 40 performs the appropriate action. For example, upon option 124 being selected, processor 40 may display directions to and/or from the destination (see FIGS. 8 and 12). Upon option 126 being selected, processor 40 may provide a map displaying the location of the destination (see FIG. 13). Upon option 128 being selected, processor 40 may initiate a phone call with the destination. Upon option 130 being selected, the destination information is uploaded to a contacts database on device 10. Upon option 132 being selected, additional options may be provided to a user (e.g., whether to display results in miles/kilometers, whether to limit the results provided by distance or number of results, whether to avoid traffic congestion, toll-roads, etc., and so on.).

Referring to FIG. 8, upon a user selecting option 124 (see FIG. 7), an image 150 of driving directions may be displayed as textual directions. According to one embodiment, image 150 includes a series of directions 154 listed in a textual format. Image 150 may include a toggle input interface 152 that permits a user to toggle between a textual display (such as is illustrated in FIG. 8), and a graphical display (such as is illustrated in FIG. 12). The user may be provided with information such as the total distance, total estimated travel time, subsequent action steps, and so on. Other information may also be provided.

Referring to FIG. 12, a graphical display, shown as image 170, of directions to/from a destination includes a route 172 superimposed upon a map 173 and a toggle input interface 174 to permit users to toggle between textual and graphical displays. Image 170 also includes a menu 175 of options from which a user may choose in order to obtain additional information.

Referring to FIG. 13, an image 176 according to another embodiment is shown. As shown in FIG. 13, image 176 includes a map 177 showing a specific location 178. Image 176 also includes location information, shown as address 179, for the specific location 178. Image 176 may be provided, for example, when a user conducts a location-based search from image 50 that is based on a specific location (e.g., a single street address).

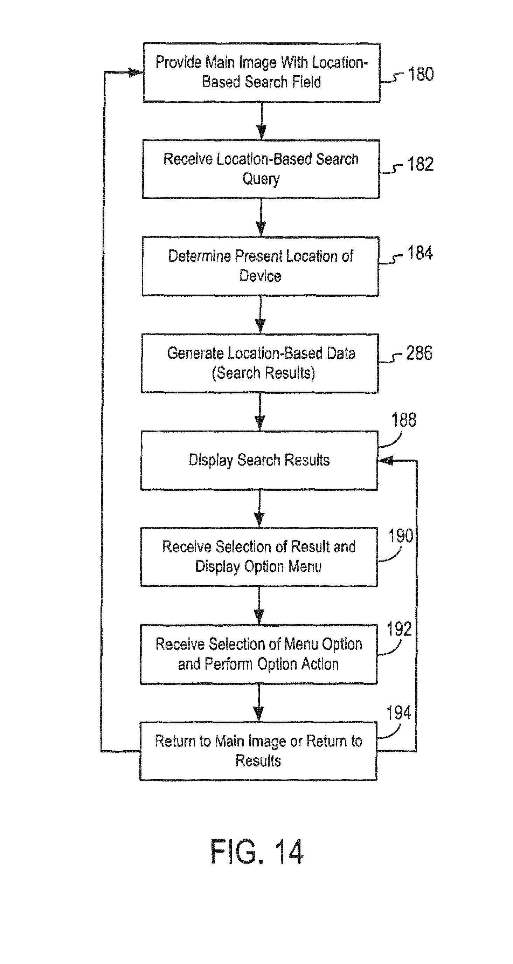

Referring now to FIG. 14, a flowchart illustrating the steps of performing a location-based search from the main image of a mobile computing device is illustrated.

At step 180, processor 40 provides an image portion for location-based searching having a user input field(s) as a part of main image 50. The user input field may include, among others, any of the user input field illustrated in the embodiments shown in FIGS. 4 and 5.

At step 182, device 10 receives the location-based search query via the user input field (e.g., user input fields 64, 66 shown in FIG. 4) and in response to an initiation request from the user, initiates the location-based search based upon the search query and the present location of device 10.

At step 184, processor 40 communicates with GPS application 44 to determine the present location of device 10. As discussed above, if the location of the device cannot be determined, processor 40 may prompt the user to manually input the location or utilize a default location.

At step 186, the location-based search results (i.e., location-based data) are generated. The results may be generated using an entirely on-board configuration, an off-board configuration, or a hybrid configuration, as discussed with respect to FIG. 3.

At step 188, the search results are displayed on display 18. The results may be displayed either textually (see FIG. 6), or graphically (see FIGS. 9, 10, and 13). Further, a user may toggle between textual and graphical result images.

At step 190, device 10 receives a selection of one of the results via the results display and/or input device 20 and processor 40 provides a menu of options (see FIGS. 7 and 11).

At step 192, device 10 receives a selection of one of the menu options and processor 40 performs the appropriate action, e.g., places a phone call, provides directions to/from a destination, adds destination information to a contacts database, etc. (see FIGS. 8 and 12).

At step 194, the user may choose to return to the results list, or return to main image 50 and perform another location-based search or other operation.

According to any of the various embodiments, additional information may be displayed along with the location-based search results shown in the FIGURES. For example, in addition to the results satisfying a specific search query, additional points of interest (e.g., restaurants, banks, hospitals, ATM's etc.) located in the geographic area of the results may additionally be provided, e.g., as separate icons in one or more images provided on display 18. Further, while the results shown in the various embodiments are provided via display 18, according to various alternative embodiments, device 10 may instead, or in addition, provide location-based search results audibly to a user (e.g., via a simulated voice application and a speaker such as loudspeaker 26 shown in FIG. 2).

While the detailed drawings, specific examples and particular formulations given describe exemplary embodiments, they serve the purpose of illustration only. The hardware and software configurations shown and described may differ depending on the chosen performance characteristics and physical characteristics of the computing devices. The systems shown and described are not limited to the precise details and conditions disclosed. Furthermore, other substitutions, modifications, changes, and omissions may be made in the design, operating conditions, and arrangement of the exemplary embodiments without departing from the scope of the invention as expressed in the appended claims.

Insofar as embodiments of the invention described above are implementable, at least in part, using a software-controlled programmable processing device such as a general purpose processor or special-purposes processor, digital signal processor, microprocessor, or other processing device, data processing apparatus or computer system it will be appreciated that a computer program for configuring a programmable device, apparatus or system to implement the foregoing described methods, apparatus and system is envisaged as an aspect of the present invention. The computer program may be embodied as any suitable type of code, such as source code, object code, compiled code, interpreted code, executable code, static code, dynamic code, and the like. The instructions may be implemented using any suitable high-level, low-level, object-oriented, visual, compiled and/or interpreted programming language, suchs as C, C++, Java, BASIC, Perl, Matlab, Pascal, Visual BASIC, JAVA, ActiveX, assembly language, machine code, and so forth. A skilled person would readily understand that term "computer" in its most general sense encompasses programmable devices such as referred to above, and data processing apparatus and computer systems.

Suitably, the computer program is stored on a carrier medium in machine readable form, for example the carrier medium may comprise memory, removable or non-removable media, erasable or non-erasable media, writeable or re-writeable media, digital or analog media, hard disk, floppy disk, Compact Disk Read Only Memory (CD-ROM), Company Disk Recordable (CD-R), Compact Disk Rewriteable (CD-RW), optical disk, magnetic media, magneto-optical media, removable memory cards or disks, various types of Digital Versatile Disk (DVD) subscriber identify module, tape, cassette solid-state memory. The computer program may be supplied from a remote source embodied in the communications medium such as an electronic signal, radio frequency carrier wave or optical carrier waves. Such carrier media are also envisaged as aspects of the present invention.

Further aspects are disclosed in the following numbered clauses.

### CLAUSES

1. An electronic device, comprising:
   a processing circuit configured to operate at least a first application and a second application, the first application configured to provide location-based data based upon a request for the location-based data; and
   a display configured to provide an image having a first image portion associated with the first application and a second image portion associated with the second application;
   wherein the first image portion is configured to receive the request for the location based data.
2. The electronic device of clause 1, wherein the second application is configured to store personalized user data, and the second image portion is configured to display a subset of the personalized user data.
3. The electronic device of clause 1 or 2, wherein the first image portion includes a user input field configured to receive the request.
4. The electronic device of clause 3, wherein the user input field comprises a first user input field and a second user input field.
5. The electronic device of clause 3 or 4, wherein the user input field is an integrated user input field further configured to receive a request for non-location-based data.
6. The electronic device of clause 5, wherein the processor is configured to selectively provide one of location-based data and non-location-based data.
7. The electronic device of any preceding clause, wherein the personalized user data includes information associated with at least one of an email, a phone call, a calendar appointment, and a text message.
8. The electronic device of any preceding clause, further comprising:
   a location-determining application;
   wherein the location of the electronic device is determined by the location determining application, and the location-based data is further based upon the location of the electronic device.
9. The electronic device of clause 8, wherein the location-based data is displayed in a text format and includes at least one of a name, a distance, and a location.
10. The electronic device of clause 8 or 9, wherein the location-based data is superimposed on a map graphic and includes at least one of a mapping of the location of the selection, directions to the selection, and a phone number for the selection.
11. The electronic device of any preceding clause 1 , wherein the electronic device is a handheld computing device.
12. A method of providing location-based data, comprising:
   displaying an image on a display for an electronic device, the image having a first image portion associated with a first application and a second image portion associated with a second application;
   receiving a request for location-based data via the first image portion; and providing the location-based data based upon the request.
13. The method of clause 12, wherein the second image is configured to display a subset of personalized user data stored by the second application.
14. The method of clause 12 or 13, wherein receiving the request comprises receiving a textual input via at least one user input field included in the first image portion.
15. The method of any of clause 12 to 14, further comprising:
   determining the location of the electronic device; and
   providing the location-based data further based upon the location of the electronic device.
16. The method of any of clause 12 to 15, wherein providing the location based data comprises selectively displaying the location-based data in one of a text format and a graphics format.
17. A mobile computing device, comprising:
   a processor configured to operate a location data application and a plurality of personal data applications; and
   a display configured to display a plurality of image portions, each image portion being associated with a different application of the location data application and the plurality of personal data applications;
   wherein the location data application is configured to provide location-based data based upon a request received via the image portion associated with the location data application; and
   wherein each image portion associated with one of the plurality of personal data applications is configured to display a subset of the personalized user data stored by the respective personal data application.
18. The mobile computing device of clause 17, wherein at least one image portion associated with a personal data application includes a user input field configured to receive data from a user.
19. The mobile computing device of clause 17 or 18, wherein at least one image portion associated with a personal data application includes a selectable icon associated with the personal data application.
20. The mobile computing device of any of clauses 17 to 19, wherein the plurality of personal data applications includes at least three personal data applications.
21. A computer program product comprising machine or computer readable program elements executable in a processor to configure an electronic device in accordance with any of clauses 1 to 11, implement the method of any of clauses 12 to 16 and/or configure a mobile computing device in accordance with any of clauses 17 to 20.
22. A computer program carrier medium structured to carry and/or store the computer program of clause 21.

## Claims

1. A handheld computing device (10), comprising:
a processing circuit (40) configured to operate a plurality of applications including a first application and a second application; and
a display configured to provide a main image (50) via the display operative to present a plurality of image portions (52, 54, 56, 58, 62, 74, 84, 90), forming a part of the main image provided via the display, wherein each of the image portions is associated with an application including a first image portion (84) associated with the first application and including a second image portion (52) associated with the second application;
wherein the first image portion (84) comprises a first user input field (86) configured to receive both a search request comprising non-location-based input and a search request comprising location based input to provide an integrated user input field;
wherein the second image portion (52) comprises a second user input field configured to receive a request for personalized user data; and the second application is launched on the handheld device responsive to the request for personalized user data by user activation of an appropriate second image portion; and
the processing circuit is further configured to configure the display to provide a menu user activatable to either invoke a non-location-based search or invoke a location determining application responsive to initialization of a location based search, the non- location-based search and the location based search performed using input to the first user input field.

2. The handheld computing device of claim 1, wherein the second application is configured to store the personalized user data, and the second image portion (52) is configured to display a subset of the personalized user data based on the request for personalized user data.

3. The handheld computing device of Claim 1 or Claim 2 wherein the processor is configured to provide one of location-based data and non-location based data.

4. The handheld computing device of Claim 1, wherein the personalized user data includes information associated with at least one of an email, a phone call, a calendar appointment, contact information, and a text message.

5. The handheld computing device of any preceding claim, further comprising:
a location-determining application;
wherein the location of the handheld computing device is determined by the location determining application, and the location-based data is further based upon the location of the handheld computing device.

6. The handheld computing device of claim 5, wherein the location-based data is displayed in a text format and includes at least one of a name, a distance, and a location; and/or
wherein the location-based data is superimposed on a map graphic and includes at least one of a mapping of the location of the selection, directions to the selection, and a phone number for the selection.

7. A method of providing location-based data on a handheld computing device (10), comprising:
displaying an image on a display of the handheld computing device (10), the image including a main image portion (84) associated with a first application and including a second image portion (52) associated with a second application;
wherein the first image portion comprises a first user input field (86) configured to receive both a search request comprising non-location based input and a second request comprising location-based input;
wherein the second image portion (52) comprises a second user input field configured to receive a request for personalized user data and invoke the second application responsive to the request for personalized user data; and
displaying a menu user activatable to either invoke a non-location based search or invoke a location determining application responsive to initialization of a location based search, the non-location based search and the location based search performed using input to the first user input field.

8. The method of claim 7, wherein the second image portion is configured to display a subset of personalized user data stored by the second application; and/or receiving the location based search request comprises receiving a textual input via at least one user input field included in the first image portion.

9. The method of claim 8, further comprising:
determining the location of the handheld computing device; and
providing the location-based data further based upon the location of the electronic device; and/or
providing the location based data comprises selectively displaying the location-based data in one of a text format and a graphics format.

10. The electronic device of Claim 1 wherein the handheld computing device is a mobile computing device.

11. The electronic device of Claim 1 wherein the processing circuit is further configured to operate a plurality of personal data applications.

12. The electronic device of Claim 11 wherein the display is configured to provide an interface portion associated with each of the plurality of personal data applications.

13. The electronic device of Claim 12 wherein each interface portion is configured to display a subset of the personalized user data stored by the respective personal data application.

14. The mobile computing device of claim 11, wherein at least one image portion associated with a personal data application includes a user input field configured to receive data from a user; and/or wherein at least one interface portion associated with a personal data application includes a selectable icon associated with the personal data application.

15. The mobile computing device any of claims 11 or 12, wherein the plurality of personal data applications includes at least three personal data applications.

16. A computer program product comprising machine or computer readable program elements executable in a processor to configure a handheld computing device in accordance with any of claims 1 to 6 or claims 10 to 15, implement the method of any of claims 7 to 9.

17. A computer program carrier medium structured to carry and/or store the computer program of claim 16.
